# EUROPEAN PATENT APPLICATION

(11) **EP 3 654 513 A1**
(43) Date of publication of application: **20.05.2020**
(21) Application number: 18020610.4
(22) Date of filing: 15.11.2018
(51) Int. Cl.: H02M 3/156, H02M 7/217, H02N 2/18

(54) **CONDITIONING SYSTEM FOR A TRIBOELECTRIC NANOGENERATOR OR AN ELECTROSTATIC KINETIC ENERGY HARVESTER**

(71) Applicant: Chambre de Commerce et d'Industrie de Région Paris Ile de France (ESIEE Paris), 75008 Paris (FR)
(72) Inventor: Basset, Philippe, 94120 Fontenay-sous-Bois (FR); Zhang, Hemin, 77420 Champs-sur-Marne (FR)
(74) Representative: Balmary, Simon

(57) **Abstract**

The present invention concerns a conditioning system for a triboelectric nanogenerator or an electrostatic kinetic energy harvester, with:- a first stage comprising: an AC-to-DC voltage rectifier (1), intended to be connected to the energy harvesting device; an input capacitor (2) Cᵢₙₚᵤₜ, charged by the AC-to-DC voltage rectifier 1; with an input voltage between a high voltage terminal N, N1, N2 and a ground terminal; -a second stage comprising: a step-down DC-DC converter (4), with a converter input terminal O and a converter output terminal P, a self-actuated electrostatic switch (3), having an actuation voltage driven by the high-voltage terminal N, N1, N2 of the input capacitor (2) Cᵢₙₚᵤₜ and the converter input terminal O, the self-actuated electrostatic switch (3) creating an hysteresis of the input voltage by realizing : a current between the two electrodes when the input voltage evolves from a ON input voltage V_{ON} until a OFF input voltage V_{OFF}, no current between the two electrodes when the input voltage evolves from the OFF input voltage V_{OFF} until the ON input voltage V_{ON}, the ON input voltage V_{ON} being higher than the OFF input voltage V_{OFF}, and the OFF input voltage V_{OFF} being preferentially superior to 0V.

## Description

### FIELD OF THE INVENTION

The invention concerns a conditioning system for triboelectric a nanogenerator or any other kind of electrostatic kinetic energy harvesters.

### STATE OF ART

A classical technic to manage low-power electrostatic kinetic energy harvesters (e-KEHs) or triboelectric energy harvesters (TENGs) is to accumulate the harvested electrical energy into a reservoir capacitor before opening a self-actuated electrical-triggered switch in order to transfer a sufficient amount of energy toward the load [1]. Another approach is to use a motion-triggered switch directly connected to the transducer [2]. With this motion-triggered switch, the QV (charge-voltage) cycle of the storage capacitor (that indicates the stored energy at every mechanical cycle) can be enlarged by creating an instantaneous short-circuit condition, but the switch has to be a specific part of the energy harvester, which increase its complexity. In addition, the switching occurs at each high-voltage oscillation of the transducer. Knowing that each switching event spent some energy, this is not an optimal process.

Researchers also tried electronically-controlled self-actuated switches [3], combined with a diode bridge and a buck converter to manage the high output voltage and to improve the matching of the impedances. However the ac signal is rectified only after the buck converter, resulting as previously in a switching event at the same frequency that the transducer's high-voltage. In addition, the electronic used to control the switch also consumes some power, making this method not self-sustained.

A two-stage charging system has also been reported in [4]. The principle is to firstly charge a small buffer capacitor and then to transfer the energy to a larger reservoir in order to improve the impedance matching with a TENG. Two electrical switches and a dissipative transformer were employed in that system. The switches are not necessarily activated at each high-voltage oscillation. However the switches were not self-actuated (an external control is needed, which is power consuming), and the voltage across the buffer capacitor oscillates between the peak voltage and zero, which is quite inefficient because of the wasted recharging time from 0 to the peak voltage.

### SUMMARY OF THE INVENTION

Here, the invention presents a conditioning system for a triboelectric nanogenerator or an electrostatic kinetic energy harvester, with:
- a first stage comprising:
   - an AC-to-DC voltage rectifier, intended to be connected to the energy harvesting device;
   - an input capacitor Cᵢₙₚᵤₜ, connected to the output of the AC-to-DC voltage rectifier; with an input voltage across Cᵢₙₚᵤₜ between a high voltage terminal and a ground terminal,
- a second stage comprising:
   - a step-down DC-DC converter, with a converter input terminal and a converter output terminal,
   - a self-actuated electrostatic switch,
having an actuation voltage driven by the high-voltage terminal of the input capacitor Cᵢₙₚᵤₜ and the converter input terminal,
a first electrode being connected to the high-voltage terminal of the input capacitor Cᵢₙₚᵤₜ, and a second electrode being connected to the converter input terminal,
the self-actuated electrostatic switch creating an hysteresis of the input voltage by realizing :
- a current between the two electrodes when the input voltage evolves from a ON input voltage until a OFF input voltage,
- no current between the two electrodes when the input voltage evolves from the OFF input voltage until the ON input voltage,
the ON input voltage being higher than the OFF input voltage, and the OFF input voltage being preferentially superior to 0V,
at least one of the electrodes having an extremity configured for generating an ambient gas breakdown voltage which is superior or inferior to the contact actuation voltage between the two electrodes,
- an output capacitor Cₒᵤₜₚᵤₜ, with an output voltage between a high-voltage terminal and a ground terminal, and whose high-voltage terminal is connected to the converter output terminal.

Advantageously, the self-actuated electrostatic switch can have an actuation voltage only driven by the high-voltage terminal of the input capacitor Cᵢₙₚᵤₜ and the converter input terminal.

Advantageously, but not in a limited way, the conditioning system can present:
- at least one of the electrodes having a sharp extremity;
- at least one of the electrodes being moveable and is configured so that an elastic restoring force acts on the moveable electrode due to its flexibility and / or a spring attached to the electrode ;
- the electrodes are configured so that the contact actuation voltage is higher than the gas breakdown voltage.
- the electrodes are configured so that the contact actuation voltage is smaller than the gas breakdown voltage.
- the two electrodes are fixed.

The present invention concerns also a device with a triboelectric nanogenerator or an electrostatic kinetic energy harvester connected to a conditioning system as defined in previous pages.

### BRIEF DESCRIPTION OF THE DRAWINGS

Other advantages and characteristics of the disclosed devices and methods will become apparent from reading the description, illustrated by the following figures, where:
Figure 1. General view of the invented energy harvester conditioning circuit. "m-switch" in the figure represents the self-actuated electrostatic mechanical switch.
Figure 2. Description of the system used in the experiments. (a) Schematic of the self-sustained energy harvesting system with two different AC-to-DC voltage rectifiers: a(i) example with a stable charge pump, a(ii) example with an unstable charge-pump, (b) Photo (side view) of the energy harvester, (c) Principle and setup of the electrostatic switch.
Figure 3. Representation of the voltages at each node (terminal) of the invented energy harvester conditioning circuit.

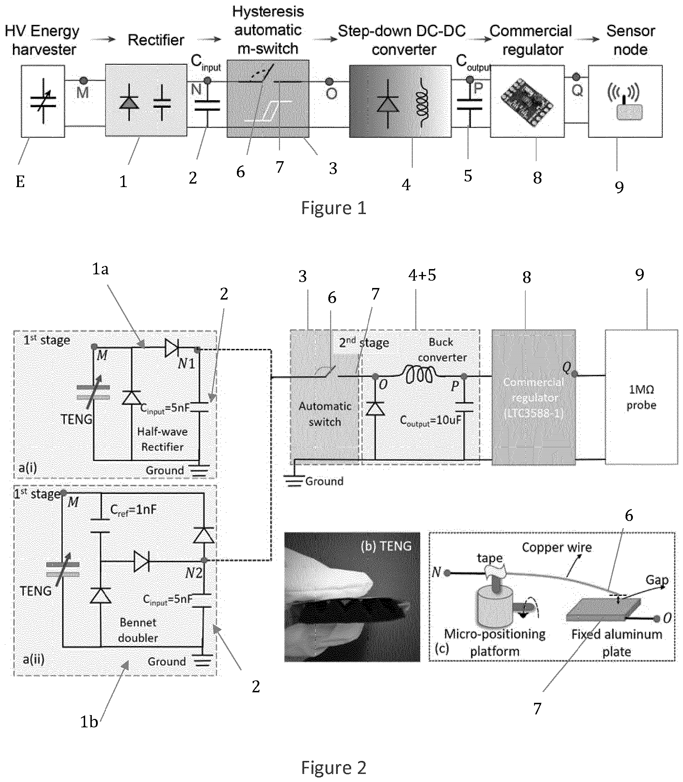

Node M: voltage across the TENG in figure 2b for an excitation force of 10 N at 5 Hz. The voltage maxima occur at each input mechanical cycle.

Node N1/N2: voltages across Cᵢₙₚᵤₜ for circuits in fig. 1a(i,ii)) showing the high-voltage hysteresis induced by the self-actuated electrostatic mechanical switch connected in series with the DC-DC converter. The converted electrical energy is accumulated into Cᵢₙₚᵤₜ during a few tens of mechanical cycles before it is transfered to Cₒᵤₜₚᵤₜ.

Node O: voltage between the switch output / the input of the DC-DC step-down converter (here a Buck circuit) and the ground. The switch is configured such as the maximum voltage is compatible with the DC-DC step-down voltage ratio.

Node P: voltage between the DC-DC converter output / the input of the commercial low-voltage regulator (LTC3558-1) and the ground. The DC-DC converter is configured such as its output voltage is compatible with the input of the regulator.

Node Q: regulated voltage across a 1 MΩ load. A delay is necessary to initially charge Cₒᵤₜₚᵤₜ to a sufficient voltage.

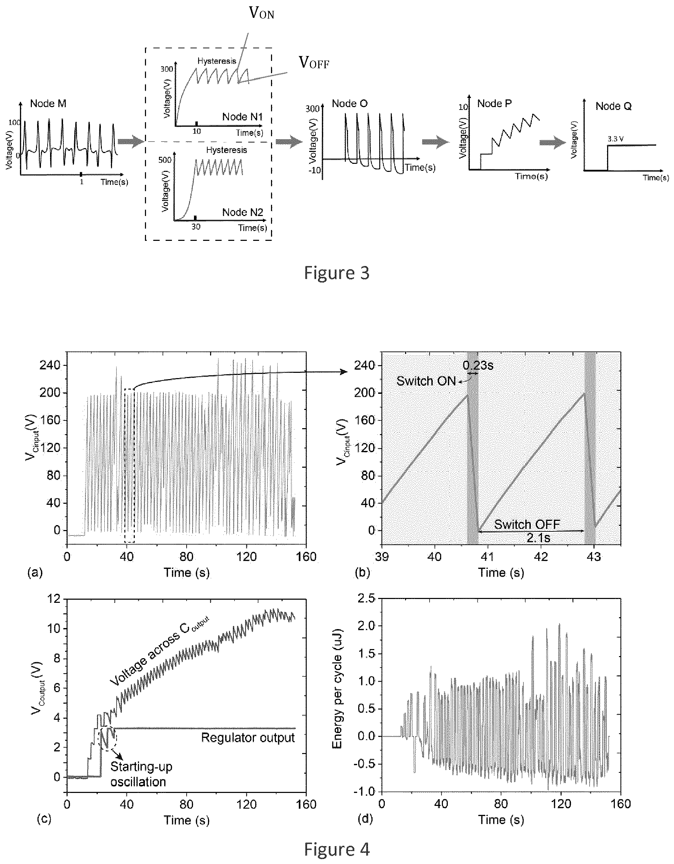

Figure 4. The electrical performance of the full 2-stage energy storage system with the stable charge-pump in fig. 2 (1a+2) and a self-actuated electrostatic mechanical switch having a full hysteresis (the OFF input voltage equals 0V). The voltage across Cᵢₙₚᵤₜ (Node M) (a) and its detailed view (b) versus time. The voltage across Cₒᵤₜₚᵤₜ (Node P) and the 1MΩ load (Node Q) (c), and the calculated energy per input mechanical cycle in Cₒᵤₜₚᵤₜ (d).

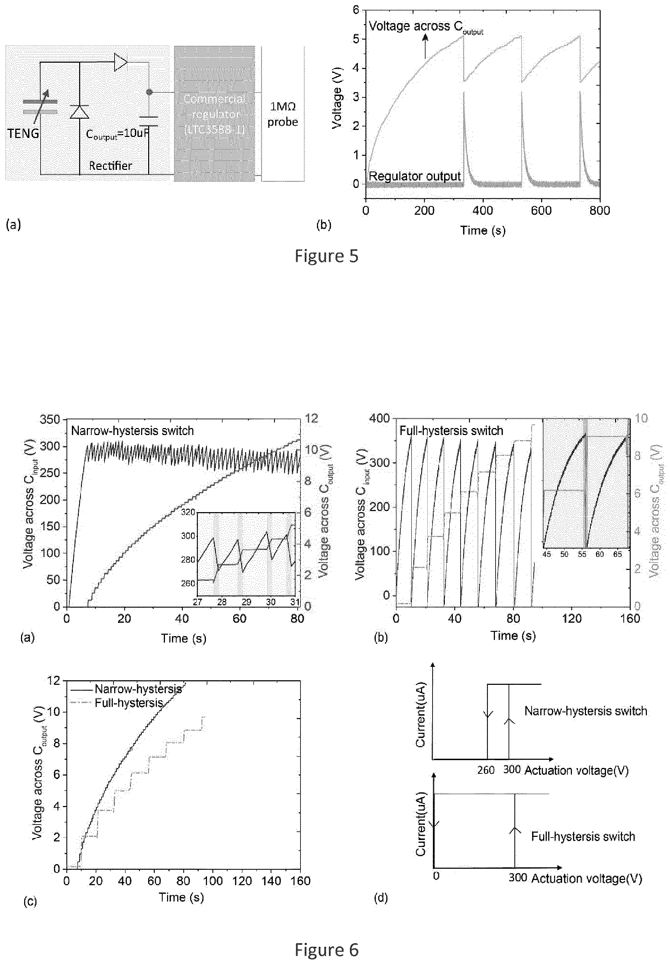

Figure 5. The electrical performance of a classical 1-stage stable charge pump (a half-wave rectifier) without switch and step-down DC-DC converter to drive the regulator in similar experimental conditions than in figure 4. The experimental setup (a), and the voltage across Cₒᵤₜₚᵤₜ as well as the output of the regulator (b). The energy stored in Cₒᵤₜₚᵤₜ cannot supply the regulator in order to obtain a constant voltage across the 1 MΩ load.

Figure 6. The effect of the OFF input voltage in a 2-stage system without load and regulator and with the stable charge-pump as in fig. 2 (1a+2). (a) The voltage across Cᵢₙₚᵤₜ and voltage Cₒᵤₜₚᵤₜ with a narrow hysteresis switch, (b) The voltage across Cᵢₙₚᵤₜ and voltage across Cₒᵤₜₚᵤₜ with a full-hysteresis switch (the OFF input voltage is higher than 0V) in similar experimental conditions. (c) The comparison of the 2 voltages across Cₒᵤₜₚᵤₜ. The higher slope of the voltage with the switch having a narrow hysteresis demonstrates its better performance.

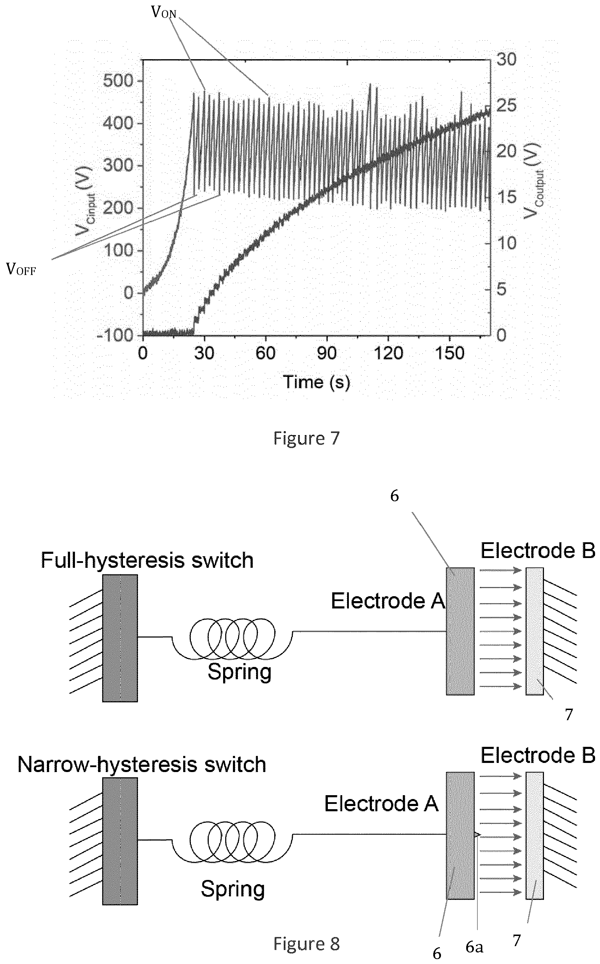

Figure 7. The voltage across Cₒᵤₜₚᵤₜ and voltage across Cᵢₙₚᵤₜ when using a 2-stage system without load and regulator, and with the unstable charge-pump (1b+2) as the rectifier and a narrow self-actuated electrostatic mechanical switch having an ON actuation voltage around 450 V. The unstable charge-pump allows reaching higher voltages across the transducer for better efficiency. The OFF actuation voltage could be optimized (here increased) by using a MEMS switch.

Figure 8. Example of implementations of the full-hysteresis switch and below the narrow hysteresis switch.

### GENERAL DESCRIPTION

As represented in figures 1 and 2, the present invention concerns a conditioning system for a triboelectric nanogenerator (TENG) or an electrostatic kinetic energy harvester called E on figure 1, with two stages.

A first stage comprises:
- an AC-to-DC voltage rectifier 1, intended to be connected to the energy harvesting device;
- an input capacitor 2 Cᵢₙₚᵤₜ, connected to the output of the AC-to-DC voltage rectifier 1, with an input voltage across Cᵢₙₚᵤₜ between a high-voltage terminal N, N1, N2 and a ground terminal.

A second stage comprises:
- a step-down DC-DC converter 4, with a converter input terminal O and a converter output terminal P,
- a self-actuated electrostatic switch 3,
having an actuation voltage driven by the high-voltage terminal N, N1, N2 of the input capacitor 2 Cᵢₙₚᵤₜ and the converter input terminal O, as represented in figure 2.

As represented in figure 3, the self-actuated electrostatic switch 3 creating a hysteresis of the input voltage by realizing:
- a current between the two electrodes when the input voltage evolves from a ON input voltage (V_{ON}) until a OFF input voltage (V_{OFF}),
- no current between the two electrodes when the input voltage evolves from the OFF input voltage (V_{OFF}) until the ON input voltage (V_{ON}),
the ON input voltage (V_{ON}) being higher than the OFF input voltage (V_{OFF}), and the OFF input voltage being preferentially superior to 0V.

In the invention, the preferentially hysteresis is called "narrow" and is different from the full-hysteresis of the state of the art [3], the ON input voltage V_{ON} and the OFF input voltage V_{OFF} being close together and being non-zero and superior to zero volt, as represented on figures 6a, 6c, 6d. Only a full-hysteresis is represented on figure 6b.

### Capacitors

The conditioning system presents also an output capacitor 5 Cₒᵤₜₚᵤₜ, with an output voltage between a high-voltage terminal P and a ground terminal, and whose high-voltage terminal is connected to the converter output terminal.

The input capacitor 2 Cᵢₙₚᵤₜ can be 10 to 100 times higher than a minimum capacitance of the energy harvester.

The output capacitor 5 Cₒᵤₜₚᵤₜ can be 1000 to 10000 times higher than the input capacitor 2 Cᵢₙₚᵤₜ.

For instance, here in the example of the figure 2:
- the input capacitor 2 Cᵢₙₚᵤₜ has few nF;
- the output capacitor 5 Cₒᵤₜₚᵤₜ has a few tens µF;
- the minimum capacitance of the energy harvester has a few tens Picofarad and its maximum has a few hundred of pF.

### DC-DC converter

The DC-DC converter can be a buck converter 4+5.
In another technical realization, the DC-DC converter can be a transformer [3].

### AC-DC voltage rectifier

In a technical realization, the AC-DC voltage rectifier 1 is an unstable charge-pump, for instance from the family of the Bennet doubler.

In another technical realization, the AC-DC voltage rectifier 1 is a stable charge pump.

The AC-to-DC voltage rectifier 1 circuit can be made of diodes and/or capacitors.

The voltage (V_{ON}+V_{OFF})/2 can be equal (or close to; for instance about 80%-90% at least) the half of the saturation voltage of the stable-charge pump (it corresponds to the middle of the narrow-hysteresis) for maximum efficiency. The saturation voltage considered here is the input voltage when the switch 3 remains OFF for a while.

### Low-voltage output regulator

The system presents a low-voltage output regulator 8, connected to the output capacitor 5 Cₒᵤₜₚᵤₜ and intended to be connected to an electrical load, with an output voltage inferior to the OFF input voltage V_{OFF}.

### Electrodes

At least one of the electrodes 6, 7 having an extremity generating an ambient gas breakdown voltage (which means a micro-plasma occurs), which is superior or inferior to the contact actuation voltage (which means the actuation voltage where one of the electrode touches the other) between the two electrodes; the inventors have defined three different embodiments described hereafter and which are possible for their invention.

A first electrode 6 is connected to the high-voltage terminal N, N1, N2 of the input capacitor 2 Cᵢₙₚᵤₜ.

A second electrode 7 is connected to the converter input terminal O.

Advantageously, at least one of the electrodes here the electrode 6 in figure 8 having a sharp extremity 6a, for the narrow-hysteresis switch.

Advantageously, at least one of the electrodes 6, 7 is moveable and an elastic restoring force acts on the moveable electrode 6, 7.

In a technical realization, the electrode is configured to be flexible. For instance, the moveable electrode is clamped-free and is maintained at an initial gap regarding the other electrode without voltage.

In another technical realization, the electrode can be movable and rigid, but is attached to a mechanical spring.

In variant not represented, the self-actuated electrostatic switch 3 presents two electrodes 6, 7 which are moveable.

The electrode can be realized using silicon-based MEMS technologies

The fixed or movable electrode 6, 7 can be connected to the high-voltage terminal N, N1, N2 of the input capacitor 2 Cᵢₙₚᵤₜ.

In a technical realization, the OFF input voltage V_{OFF} is at least 80% of the ON input voltage V_{ON}.

The ON and OFF input voltages V_{ON} and V_{OFF} can be superior to 50V.

The ON input voltage V_{ON} and/or the OFF input voltage V_{OFF} can be variable values. As represented on figure 6a, the ON input voltage V_{ON} decreases slightly with time.

### Three embodiments of the invention

The contact actuation voltage between the two electrodes 6, 7, in the case where at least one of the electrode is moveable, is mainly configured by:
- the initial gap between the two electrodes 6, 7 ;
- the shape of the electrodes 6, 7 ;
- the stiffness of the movable electrode 6, 7 .

The ambient gas breakdown voltage between the two electrodes 6, 7 is mainly configured by:
- the initial gap between the two electrodes 6, 7 ;
- the shape of the electrodes 6, 7 ;
- the composition and the pressure of the ambient gas;
- the material of the electrodes 6, 7 (especially the nature and the conductivity).

The inventors adjust these parameters to realize three differents embodiments of the conditioning system of the invention, which works with hysteresis.

### First embodiment

In a first embodiment, the electrodes 6, 7 are configured so that at least one of the electrodes 6, 7 is moveable and the contact actuation voltage is higher than the gas breakdown voltage.

When the input voltage increases between the terminal N1 (or N2) and the ground terminal, the moveable electrode progressively moves towards the other one, which decreases the ambient gas breakdown voltage according to the Pashen law.

At some moment a micro plasma occurs due to the actuation voltage and a current flow being created between the two electrodes 6, 7, the ON input voltage V_{ON} being reached; the switch 3 is ON and the contact actuation voltage is not reached by the actuation voltage.

Then, the input voltage between the terminals N1 (or N2) and the ground terminal decreases, and the gap between the electrodes 6, 7 increases because of the elastic restoring force which becomes superior to the electrostatic force (whose value is proportional to the square of the actuation voltage), the conditions of the Pashen law being not filled and the micro plasma being stopped: the OFF input voltage V_{OFF} between the terminals N1 (or N2) and the ground terminal has been reached and the switch 3 is OFF (no current).

### Second embodiment

In a second embodiment, the electrodes 6, 7 are configured so that the contact actuation voltage is smaller than the gas breakdown voltage, and at least one of the electrode 6 is moveable.

When the input voltage between the terminals N1 (or N2) and the ground terminal increases, the actuation voltage reaches the contact actuation voltage of the switch 3, the movable electrode comes into contact with the other one and a current flows between the electrodes 6, 7. The ON input voltage V_{ON} is reached, the switch 3 is ON, and the gas breakdown voltage is not reached by the actuation voltage.

Then, the input voltage between the two electrodes decreases abruptly, decreasing the actuation voltage, the OFF input voltage V_{OFF} being equal to 0V, the electrostatic force almost disappeared and the restoring spring force makes the movable electrode to separate from the fixed electrode, the contact is lost, the OFF input voltage V_{OFF} is reached; the switch 3 is OFF (no current).

### Third embodiment

In a third embodiment of the invention, the two electrodes 6, 7 are fixed.

In this case, there is no contact between the switch electrodes. When the input voltage increases, and the actuation voltage between the terminals N1 (or N2) and the input terminal O of the step-down DC-DC converter 4 reaches the ambient gas breakdown voltage, a micro plasma occurs and a current flows between the electrodes 6, 7: the ON input voltage V_{ON} is reached and the switch 3 is ON.

Then, the input voltage decreases, and the actuation voltage decreases between the electrodes and at some point the plasma stopped: the OFF input voltage V_{OFF} is reached and the switch 3 is OFF (no current).

### DETAILED DESCRIPTION OF A REALIZATION

The energy harvester output is an AC voltage that has to be rectified using a charge pump (stable one like full or half-wave diode bridges or unstable one like a Bennet doubler) to charge a capacitor that drives the electronics. To avoid the great energy loss in the energy transfer from the transducer (harvester) to the storage capacitor due to the impedance mismatch (for instance the internal impedance of a triboelectric nanogenerator (TENG) is much higher than that of the external storage capacitor), we propose the following novel two-stage system. It can considerably increase the charging efficiency compared to other solutions that can be found in the literatures.
- The 1st stage is made of the voltage rectifying module charging a small buffer capacitor Cᵢₙₚᵤₜ. Due to its small value (typically a few nF), it is quickly charged by the transducer to a high voltage (typically few tens to few hundreds of volts).
- The 2nd stage includes a self-actuated electrostatic mechanical switch 3 (SAEMS) and possibly a step-down DC-DC converter like a LC buck converter 4+5. Here in the preliminary demonstrations, the SAEMS is manually made of a fixed and a moving electrodes. The initial gap between the electrodes is a key parameter defining the contact actuation voltage of the SAEMS and the micro-plasma creation (switching ON according to first embodiment) and can be controlled by a 3-axis micro-positioning platform. The switching OFF can be adjusted with the shape of the electrodes of switch 3. The moving electrode is connected to the high-voltage of Cᵢₙₚᵤₜ, and the fixed one is connected to the input of a (optional) buck converter 4+5 having a large output capacitor 5 Cₒᵤₜₚᵤₜ (typ. a few tens µF). This combination (SAEMS+Buck) allows to decrease the high voltage across Cᵢₙₚᵤₜ to a reasonable value (a few volts) that can be regulated with a commercial regulator 8 in order to provide a constant low voltage to the device to be powered 9.

Fig. 1 shows the schematic view of the invention. The output of the TENG is a high voltage (HV) impulse, with a peak around 100 V (as a typical example). The voltage across Cᵢₙₚᵤₜ is DC, with a saturated voltage for stable rectifiers (in case of a half-wave diode bridge, V_{Cinput} can be much higher than VTENG_max if there is a high TENG capacitance variation), or a voltage without limitation for unstable rectifiers like the Bennet doubler (until the electrostatic air breakdown given by the Pashen law or any practical limits due to the electrical components) .

In case of a stable rectifier 1, the objective of the switch 3 is to keep V_{Cinput} around its optimal value, which is typically half of the saturation voltage. In case of an unstable rectifier 1, the objective of the switch 3 is to keep V_{Cinput} as high as possible because a higher voltage leads to a higher harvested energy per cycle, according to HV capability of the rest of the conditioning circuit.

The objective of the DC-DC step down converter 4+5 is to bring back the HV voltage across Cᵢₙₚᵤₜ to the input span of the commercial regulator 8 (20 V for the device used in our experiments).

The DC-DC step down converter 4+5 is here a Buck converter with a diode, an inductance and an output capacitor 5 Cₒᵤₜₚᵤₜ.

The voltage across Cₒᵤₜₚᵤₜ increases each time the switch 3 turns ON and slightly decreases when the switch 3 is OFF (demonstrating the following load does not dissipate more energy than the harvested one). So the load is continually powered at 3.3V through the commercial regulator 8 (or any low voltage that suits the power supply of the electrical load).

Fig. 2 shows a schematic of such a demonstrated system with a TENG and a Buck converter. Fig. 4 shows the experimental results with a half-wave rectifier 1 and a self-actuated electrostatic switch 3 with full-hysteresis (i.e. V_{Cinput} re-reaches zero volt at each activation).

The voltage across Cᵢₙₚᵤₜ is shown in Fig. 4a, with the oscillating between -200V and 0V. The oscillating voltage across Cₒᵤₜₚᵤₜ and the output of the regulator 8 are shown in Fig. 4c. As explained before, the increase of V_{Coutput} is due to the charge accumulation transferred from Cᵢₙₚᵤₜ when the switch 3 is ON, while the voltage decrease is caused by the power consumption of the commercial regulator 8 and the output load (the testing probe) when the switch 3 is OFF.

As a comparison, Fig. 5 shows the same experiments but only with stage 1 to directly charge the storage capacitor Cₒᵤₜₚᵤₜ. It is seen that the commercial regulator 8 cannot be sustained by the energy stored in Cₒᵤₜₚᵤₜ, as the output of the regulator 8 is quickly dropping to 0V once it reaches 3.3 V. In this example, only our invention allows to power the commercial regulator 8.

Furthermore, the charging efficiency and output power can be improved with a switch 3 having an hysteresis, as shown in Fig. 6 (here Cₒᵤₜₚᵤₜ is not connected to the regulator 8, this is why there is no decrease and oscillation for the voltage across Cₒᵤₜₚᵤₜ).

When replacing the previous stable charge pump (the half-wave rectifier 1a) with an unstable charge pump (a Bennet doubler 1b), the charging rate and then the output power are further improved, as shown in Fig. 7 (here Cₒᵤₜₚᵤₜ is not connected to the regulator 8, and because the OFF input voltage V_{OFF} of the switch 3 is not well optimized, the oscillation of the voltage across Cᵢₙₚᵤₜ is too large for the best efficiency).

A schematic implementations of the two switches are indicated in Fig. 8. For the hysteresis switch 3, the extremity of the copper wire is cut with a sharp extremity. It induces the well-known "sharp-edge" effect in electrostatic, corresponding to a large increase of the electric field at the extremity of the electrode for a given bias. This results in a decrease of the ambient gas breakdown voltages, allowing to shift from embodiment 2 to embodiment 1, i.e. to introduce a narrow hysteresis in the switch 3. A more precise design can be done with MEMS technologies.

To conclude, the inventors aim at optimizing the charge transfer from the energy harvester to the load (the sensor) using a 2-stage charging conditioning system with:
- a high-voltage self-actuated electrostatic switch 3 to avoid any external control that is power consuming; in a preferred embodiment with an narrow hysteresis at high voltage, i.e. that do not bring the transducer's voltage to zero volt at each actuation, to always work around the optimized voltage; the switch 3 can be obtained using MEMS technologies;
- in a preferred embodiment an unstable charge pump to rectify the signal without (almost) any limitation in the voltage value across the transducer (except the air breakdown) to maximize the conversion efficiency; in addition it would make sure that the ON actuation voltage V_{ON} of the electrostatic switch 3 will always be reached, even in case of the decrease in the external mechanical force of the energy harvesting device;
- avoiding the use of a transformer that dissipates energy and is bulky,
- a Buck converter 4+5 in a 2-stage architecture.

### References

[1] Y. Lu, E O'Riordan, F. Cottone, S. Boisseau, F. Marty, D. Galayko, E. Blokhina and P. Basset, "A batch-fabricated electret-biased wideband MEMS vibration energy harvester with frequency-up conversion behavior powering a UHF wireless sensor node", J. Micromech. Microeng., 26 (2016) 124004
[2] Y. Zi, J. Wang, S. Wang, S. Li, Z. Wen, H. Guo, Z. L. Wang, "Effective energy storage from a triboelectric nanogenerator."Nature communications. 2016 Mar 11;7:10987.
[3] F. Xi, Y. Pang, W. Li, T. Jiang, L. Zhang, T. Guo, G. Liu, C. Zhang and Z. L. Wang, "Universal power management strategy for triboelectric nanogenerator", Nano Energy 37 (2017) 168-76
[4] S. Niu, X. Wang, F. Yi, Y. S. Zhou, Z. L. Wang, "A universal self-charging system driven by random biomechanical energy for sustainable operation of mobile electronics." Nature communications. 2015 Dec 11; 6: 8975.

## Claims

1. Conditioning system for a triboelectric nanogenerator or an electrostatic kinetic energy harvester, with:
• a first stage comprising:
- an AC-to-DC voltage rectifier (1), intended to be connected to the energy harvesting device (E);
- an input capacitor (2) Cᵢₙₚᵤₜ, connected to the output of the AC-to-DC voltage rectifier (1); with an input voltage across Cᵢₙₚᵤₜ between a high voltage terminal (N, N1, N2) and a ground terminal,
• a second stage comprising:
- a self-actuated electrostatic switch (3),
- a step-down DC-DC converter (4), with a converter input terminal (O) and a converter output terminal (P),
the self-actuated electrostatic switch (3) having an actuation voltage driven by the high-voltage terminal (N, N1, N2) of the input capacitor (2) Cᵢₙₚᵤₜ and the converter input terminal (O),
a first electrode (5) being connected to the high-voltage terminal (N, N1, N2) of the input capacitor (2) Cᵢₙₚᵤₜ, and a second electrode (6) being connected to the converter input terminal O,
the self-actuated electrostatic switch (3) creating an hysteresis of the input voltage by realizing :
- a current between the two electrodes (6, 7) when the input voltage evolves from a ON input voltage V_{ON} until a OFF input voltage V_{OFF},
- no current between the two electrodes (6, 7) when the input voltage evolves from the OFF input voltage V_{OFF} until the ON input voltage V_{ON},
the ON input voltage V_{ON} being higher than the OFF input voltage V_{OFF}, the OFF input voltage V_{OFF} being preferentially superior to 0V,
at least one of the electrodes (6, 7) having an extremity configured for generating an ambient gas breakdown voltage which is superior or inferior to the contact actuation voltage between the two electrodes (6, 7),
- an output capacitor (5) Cₒᵤₜₚᵤₜ, with an output voltage between a high-voltage terminal and a ground terminal, and whose high-voltage terminal is connected to the converter output terminal P.

2. Conditioning system according to claim 1, wherein at least one of the electrodes (6, 7) is moveable and an elastic restoring force acts on the moveable electrode (6, 7) which is flexible and / or is attached to a spring.

3. Conditioning system according to claim 2, wherein the contact actuation voltage between the two electrodes (6, 7) is configured at least by:
- the initial gap between the two electrodes (6, 7);
- the shape of the electrodes (6, 7) ;
- the stiffness of the movable electrode (6, 7).

4. Conditioning system according to claims 1-2, wherein the ambient gas breakdown voltage between the two electrodes (6, 7) is configured at least by:
- the initial gap between the two electrodes (6, 7) ;
- the shape of the electrodes (6, 7) ;
- the composition and the pressure of the ambient gas;
- the material of the electrodes (6, 7).

5. Conditioning system according to claims 3- 4, wherein the electrodes (6, 7) are configured so that the contact actuation voltage is higher than the gas breakdown voltage.

6. Conditioning system according to claims 3-4, wherein the electrodes (6, 7) are configured so that the contact actuation voltage is smaller than the gas breakdown voltage.

7. Conditioning system according to claims 1-6, wherein at least one of the electrodes (6, 7) having a sharp extremity (6a).

8. Conditioning system according to one of claims 1, 1 with 4, or 1 with 7, wherein the two electrodes (6, 7) are fixed.

9. Conditioning system according to claims 1-8, wherein:
- the input capacitor (2) Cᵢₙₚᵤₜ is 10 to 100 times higher than a minimum capacitance of the triboelectric nanogenerator or an electrostatic kinetic energy harvester,
- the output capacitor (5) Cₒᵤₜₚᵤₜ is 1000 to 10000 times higher than the input capacitor (2) Cᵢₙₚᵤₜ.

10. Conditioning system according to claims 1-9, wherein a DC-DC converter (4, 5) is a buck converter.

11. Conditioning system according to claims 1-10, wherein the AC-DC voltage rectifier (1) is an unstable charge-pump (1b), for instance from the family of the Bennet doubler.

12. Conditioning system according to claims 1-10, wherein the AC-DC voltage rectifier (1) is a stable charge pump (1a), for instance a half or full-wave diode bridge.

13. Conditioning system according to claim 12, wherein half of the sum of the ON input voltage V_{ON} and the OFF input voltage V_{OFF} is equal or close to the half of the saturation voltage of the stable-charge pump (1a).

14. Conditioning system according to claims 1-13, wherein the system presents a low-voltage output regulator (8), connected to the output capacitor (5) Cₒᵤₜₚᵤₜ and intended to be connected to an electrical load, with a regulator output voltage inferior to the OFF input voltage V_{OFF}.

15. Conditioning system according to claims 1-14, wherein the OFF input voltage V_{OFF} is at least 80% of the ON input voltage V_{ON}.

16. Conditioning system according to claims 1-15, wherein The ON and OFF input voltages V_{ON} and V_{OFF} can be superior to 50V.

17. Device with triboelectric nanogenerator or an electrostatic kinetic energy harvester connected to a conditioning system according to claims 1-16.
